# EUROPEAN PATENT APPLICATION

(11) **EP 4 443 923 A1**
(43) Date of publication of application: **09.10.2024**
(21) Application number: 21965951.3
(22) Date of filing: 30.11.2021
(51) Int. Cl.: H04W 8/22

(54) **TRANSMISSION CAPABILITY REPORTING METHOD AND APPARATUS, TRANSMISSION CAPABILITY RECEIVING METHOD AND APPARATUS, AND DEVICE AND STORAGE MEDIUM**

(71) Applicant: Beijing Xiaomi Mobile Software Co., Ltd., Beijing 100085 (CN)
(72) Inventor: GAO, Xueyuan, Beijing 100085 (CN)
(74) Representative: Stöckeler, Ferdinand
(86) International application number: PCT/CN2021/134634
(87) International publication number: WO 2023/097514

(57) **Abstract**

The present application relates to the field of mobile communications. Disclosed are an uplink MIMO transmission capability reporting method and apparatus, an uplink MIMO transmission capability receiving method and apparatus, and a device and a storage medium. The method comprises: a terminal sending first signaling and second signaling to a network device, the first signaling being used for indicating a first uplink MIMO transmission capability supported by the terminal, and the second signaling being used for indicating a second uplink MIMO transmission capability supported by the terminal, wherein the first uplink MIMO transmission capability is not lower than the second uplink MIMO transmission capability, that is, the terminal supports a greater uplink MIMO transmission capability, and a greater MIMO transmission capability may also be reported by means of the first signaling, so as to support the terminal to report a greater uplink MIMO transmission capability. The method is used for matching an actual system uplink transmission capability for supporting a network to schedule the higher number of data layers, thereby realizing a higher uplink transmission rate.

## Description

### FIELD

The present invention relates to the field of mobile communications, and more particularly to a method, apparatus, device and storage medium for reporting and receiving a transmission capability.

### BACKGROUND

In a new radio (NR) system, a transmission capability supported by a protocol includes a maximum downlink transmission capacity and a maximum uplink transmission capacity. In order to improve the maximum uplink transmission capacity supported by a terminal, the terminal needs to have a higher transmission capacity. There is still a problem to be solved for the terminal to find a way to report a supported maximum transmission capacity for uplink.

### SUMMARY

Embodiments of the present invention provide a method, apparatus, device and storage medium for reporting/receiving an uplink multiple input multiple output (MIMO) transmission capability. That is, a terminal may support a greater uplink MIMO transmission capability and may report the greater MIMO transmission capability via a first signaling. In this way, it supports the terminal to report the greater uplink MIMO transmission capability for matching with an actual system uplink transmission capability, the network is supported to schedule a higher number of data layers, and a higher uplink transmission rate is achieved. The technical solutions are as follows.

According to an aspect of the present invention, a method for reporting an uplink MIMO transmission capability is provided, which is performed by a terminal and includes: sending a first signaling and a second signaling to a network device, in which the first signaling is configured to indicate a first uplink MIMO transmission capability supported by the terminal, and the second signaling is configured to indicate a second uplink MIMO transmission capability supported by the terminal. The first uplink MIMO transmission capability is not lower than the second uplink MIMO transmission capability.

According to an aspect of the present invention, a method for receiving an uplink MIMO transmission capability is provided, which is performed by a network device and includes: receiving a first signaling and a second signaling sent by a terminal, in which the first signaling is configured to indicate a first uplink MIMO transmission capability supported by the terminal, and the second signaling is configured to indicate a second uplink MIMO transmission capability supported by the terminal, and the first uplink MIMO transmission capability is not lower than the second uplink MIMO transmission capability; determining a limit on a number of layers for an actual uplink MIMO transmission according to a maximum uplink MIMO transmission capability supported by the terminal.

According to an aspect of the present invention, an apparatus for reporting an uplink MIMO transmission capability is provided, which includes: a sending module configured to send a first signaling and a second signaling to a network device, in which the first signaling is configured to indicate a first uplink MIMO transmission capability supported by the terminal, and the second signaling is configured to indicate a second uplink MIMO transmission capability supported by the terminal. The first uplink MIMO transmission capability is not lower than the second uplink MIMO transmission capability.

According to an aspect of the present invention, an apparatus for receiving an uplink MIMO transmission capability is provided, which includes: a receiving module configured to receive a first signaling and a second signaling sent by a terminal, in which the first signaling is configured to indicate a first uplink MIMO transmission capability supported by the terminal, and the second signaling is configured to indicate a second uplink MIMO transmission capability supported by the terminal, and the first uplink MIMO transmission capability is not lower than the second uplink MIMO transmission capability; a processing module configured to determine a limit on a number of layers for an actual uplink MIMO transmission according to a maximum uplink MIMO transmission capability supported by the terminal.

According to an aspect of the present invention, a terminal is provided, which includes: a processor; a transceiver connected to the processor; and a memory for storing instructions executable by the processor. The processor is configured to load and execute the executable instructions to implement the method according to the above aspect.

According to an aspect of the present invention, a network device is provided, which includes: a processor; a transceiver connected to the processor; and a memory for storing instructions executable by the processor. The processor is configured to load and execute the executable instructions to implement the method according to the above aspect.

According to an aspect of the present invention, a computer-readable storage medium is provided, which has stored therein executable program codes that, when loaded and executed by a processor, cause the method according to the above aspect to be implemented.

According to an aspect of the present invention, a chip is provided, which includes a programmable logic circuit and/or program instructions for implementing the method according to the above aspect when the chip is run on a terminal or a network device.

According to an aspect of the present invention, a computer program product is provided by embodiments of the present invention. When computer program product is executed by a processor of a terminal or a network device, it is configured to implement the method according to the above aspects.

The technical solutions according to embodiments of the present invention at least have the following advantageous effects.

With the method, apparatus, device and storage medium according to embodiments of the present invention, the terminal reports its own uplink MIMO transmission capability via the first signaling and the second signaling. Since the uplink MIMO transmission capability indicated by the first signaling is not less than the uplink MIMO transmission capability indicated by the second signaling, the terminal may support the greater uplink MIMO transmission capability and may report the greater MIMO transmission capability via the first signaling. In this way, it supports the terminal to report the greater uplink MIMO transmission capability for matching with the actual system uplink transmission capability, the network is supported to schedule a higher number of data layers, and the higher uplink transmission rate is achieved.

### BRIEF DESCRIPTION OF THE DRAWINGS

In order to clearly illustrate the technical solutions in embodiments of the present invention, the accompanying drawings to be used in the description of embodiments will be briefly introduced below. Apparently, the drawings in the following description only show some embodiments of the present invention. For those ordinarily skilled in the art, other drawings may be obtained according to these drawings without any creative work.
FIG. 1 shows a block diagram of a communication system according to an illustrative embodiment of the present invention.
FIG. 2 shows a flow chart of a method for reporting and receiving an uplink MIMO transmission capability according to an illustrative embodiment of the present invention.
FIG. 3 shows a flow chart of a method for reporting an uplink MIMO transmission capability according to an illustrative embodiment of the present invention.
FIG. 4 shows a flow chart of a method for reporting an uplink MIMO transmission capability according to an illustrative embodiment of the present invention.
FIG. 5 shows a block diagram of an apparatus for reporting an uplink MIMO transmission capability according to an illustrative embodiment of the present invention.
FIG. 6 shows a block diagram of an apparatus for receiving an uplink MIMO transmission capability according to an illustrative embodiment of the present invention.
FIG. 7 shows a schematic diagram of a communication device according to an illustrative embodiment of the present invention.

### DETAILED DESCRIPTION

In order to make objects, technical solutions and advantages of the present invention clearer, embodiments of the present invention will be further described in detail below in combination with the accompanying drawings.

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present invention. Instead, they are merely examples of devices and methods consistent with some aspects of the present invention as recited in the appended claims.

Terms used in the present invention are only for the purpose of describing specific embodiments, but should not be construed to limit the present invention. As used in the present invention and the appended claims, "a/an", "said" and "the" in singular forms are intended to include plural forms, unless clearly indicated in the context otherwise. It should also be understood that, the term "and/or" used herein represents and contains any or all possible combinations of one or more associated items listed.

It should be understood that, although terms such as "first", "second" and "third" may be used in the present invention for describing various information, these information should not be limited by these terms. These terms are only used for distinguishing information of the same type from each other. For example, first information may also be referred to as second information, and similarly, the second information may also be referred to as the first information, without departing from the scope of the present invention. For example, as used herein, the term "if' may be construed to mean "when", "upon" or "in response to determining" depending on the context.

The application scenarios of the present invention are explained below.

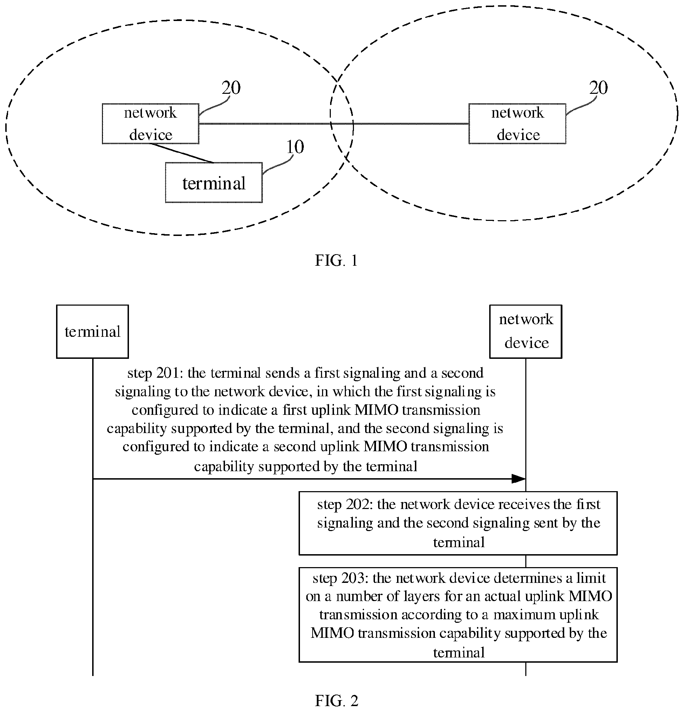

FIG. 1 shows a block diagram of a communication system according to an illustrative embodiment of the present invention. The communication system may include a terminal 10 and a network device 20.

The communication system generally includes a plurality of terminals 10, and one or more terminals 10 may be distributed in a cell managed by a network device 20. The terminal 10 may include various devices with wireless communication functions, like handheld devices, vehicle-mounted devices, wearable devices, computing devices or other processing devices connected to wireless modems, as well as various forms of user equipment (UE), mobile stations (MSs) and so on. For convenience of description, in embodiments of the present invention, the above-mentioned devices are collectively referred to as terminals.

The network device 20 is a device deployed in an access network to provide the wireless communication function for the terminal 10. The network device 20 may include various forms of macro base stations, micro base stations, relay stations, access points, etc. In systems using different wireless access technologies, the device with the network device function may have different names, for example, it is called gNodeB or gNB in a 5G NR system. As the communication technology evolves, the name for the "network device" may change. For convenience of description, in embodiments of the present invention, the above-mentioned devices that provide the wireless communication function for the terminal 10 are collectively referred to as network devices. A connection may be established between the network device 20 and the terminal 10 via a radio, so that communications, including signaling and data interactions, may be performed through the connection. There may be a plurality of network devices 20, and two adjacent network devices 20 may communicate in a wired or wireless manner. The terminal 10 may hand over between different network devices 20, that is, establish connections with different network devices 20.

The "5G NR system" in embodiments of the present invention may also be called a 5G system or an NR system, and those skilled in the art may understand their meaning. The technical solutions described in embodiments of the present invention may be applied to the 5G NR system, and may also be applied to an evolution system subsequent to the 5G NR system.

FIG. 2 shows a flow chart of a method for reporting and receiving an uplink MIMO transmission capability according to an illustrative embodiment of the present invention, which is performed by a terminal and a network device shown in FIG. 1. The method includes at least some of the following steps.

In step 201, the terminal sends a first signaling and a second signaling to a network device, in which the first signaling is configured to indicate a first uplink MIMO transmission capability supported by the terminal, and the second signaling is configured to indicate a second uplink MIMO transmission capability supported by the terminal.

In the embodiments of the present invention, the terminal itself has an uplink MIMO transmission capability. Before the terminal communicates with the network device, the terminal needs to report its own uplink MIMO transmission capability. The terminal sends the first signaling and the second signaling to the network device, indicating the uplink MIMO transmission capability supported by the terminal via the first signaling and the second signaling.

The first signaling is configured to indicate the first uplink MIMO transmission capability supported by the terminal, the second signaling is configured to indicate the second uplink MIMO transmission capability supported by the terminal, and the first uplink MIMO transmission capability is not lower than the second uplink MIMO transmission capability.

It should be noted that, in the embodiments of the present invention, the first signaling and the second signaling may be distinguished as two signalings through names of the first signaling and the second signaling.

In step 202, the network device receives the first signaling and the second signaling sent by the terminal.

After receiving the first signaling and the second signaling, the network device determines the uplink MIMO transmission capability supported by the terminal according to the first signaling and the second signaling.

In step 203, the network device determines a limit on a number of layers for an actual uplink MIMO transmission according to a maximum uplink MIMO transmission capability supported by the terminal.

In an embodiment of the present invention, the network device receives the first signaling and the second signaling, and determines the maximum uplink MIMO transmission capability supported by the terminal via the first signaling and the second signaling. When the network device configures the number of layers for the actual uplink MIMO transmission, the maximum uplink MIMO transmission capability supported by the terminal is used as a limit to complete a configuration of a number of layers for an uplink MIMO transmission.

It should be noted that the steps executed by the terminal may be implemented as one separate step, and the steps executed by the network device may be implemented as one separate step.

With the method according to embodiments of the present invention, the terminal reports its own uplink MIMO transmission capability via the first signaling and the second signaling. Since the uplink MIMO transmission capability indicated by the first signaling is not less than the uplink MIMO transmission capability indicated by the second signaling, the terminal may support a greater uplink MIMO transmission capability and may report the greater MIMO transmission capability via the first signaling. In this way, it supports the terminal to report the greater uplink MIMO transmission capability for matching with an actual system uplink transmission capability, a network is supported to schedule a higher number of data layers, and a higher uplink transmission rate is achieved.

In FIG. 2, it describes that the terminal reports its own uplink MIMO transmission capability. Based on the embodiments shown in FIG. 2, the terminal sends the first signaling and the second signaling when determining that a condition is met. This condition is described below.

A maximum uplink MIMO transmission capability supported by the terminal in embodiments of the present invention is 6 layers or 8 layers.

The terminal will introduce 6 or 8 radio frequency channels to enable the terminal to support the greater uplink MIMO transmission capability. That is, if the terminal introduces 6 radio frequency channels, the maximum uplink MIMO transmission capability supported by the terminal is 6 layers, and if the terminal introduces 8 radio frequency channels, the maximum uplink MIMO transmission capability supported by the terminal is 8 layers.

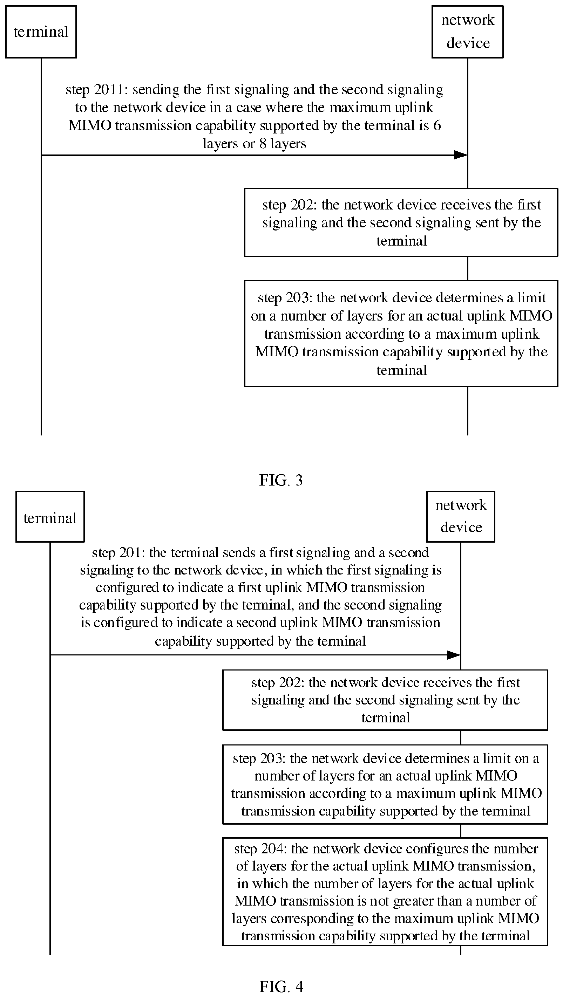

In some embodiments, referring to FIG. 3, the method includes the following steps.

In step 2011, the first signaling and the second signaling are sent to the network device in a case where the maximum uplink MIMO transmission capability supported by the terminal is 6 layers or 8 layers.

In an embodiment of the present invention, the maximum uplink MIMO transmission capability supported by the terminal is 6 layers or 8 layers. Since the second signaling cannot indicate an uplink MIMO transmission capability of 6 layers or 8 layers supported by the terminal, the terminal needs to send the first signaling and the second signaling to the network device to ensure that the terminal reports the maximum uplink MIMO transmission capability supported by itself to the network device.

In some embodiments, a maximum number of layers indicated by the first signaling is 6 layers, or a maximum number of layers indicated by the first signaling is 8 layers.

When the maximum number of layers indicated by the first signaling is 6 layers, it means that a maximum number of layers corresponding to the first uplink MIMO transmission capability indicated by the terminal via the first signaling is 6 layers. When the maximum number of layers indicated by the first signaling is 8 layers, it means that a maximum number of layers corresponding to the first uplink MIMO transmission capability indicated by the terminal via the first signaling is 8 layers.

For example, a maximum number of layers indicated by the terminal via the first signaling is 6 layers, or a maximum number of layers indicated by the terminal via the first signaling is 8 layers, or a maximum number of layers indicated by the terminal via the first signaling is other numbers of layers, which is not limited in the embodiments of the present invention.

In some other embodiments, a maximum number of layers indicated by the second signaling is 4 layers.

When the maximum number of layers indicated by the second signaling is 4 layers, it means that a maximum number of layers corresponding to the second uplink MIMO transmission capability indicated by the terminal via the second signaling is 4 layers.

For example, a maximum number of layers indicated by the terminal via the second signaling is 4 layers, or a maximum number of layers indicated by the terminal via the second signaling is 2 layers, or a maximum number of layers indicated by the terminal via the first signaling is other numbers of layers, which is not limited in the embodiments of the present invention.

It should be noted that in the embodiments of the present invention, it is only an example to describe sending the first signaling and the second signaling when the maximum uplink MIMO transmission capability supported by the terminal is 6 layers or 8 layers. In another example, the first signaling and the second signaling are sent to the network device in a case where the terminal supports a transmission capability of a new number of uplink MIMO layers.

For the terminal, a maximum number of MIMO layers indicated by the second signaling is limited. If the terminal supports the transmission capability of the new number of uplink MIMO layers, the terminal cannot use the second signaling to report the new number of uplink MIMO layers supported by itself. Therefore, the terminal sends the first signaling and the second signaling to the network device in the case where it supports the transmission capability of the new number of uplink MIMO layers. Since the first uplink MIMO transmission capability indicated by the first signaling is not less than the second uplink MIMO transmission capability indicated by the second signaling, the first signaling may be used to indicate the new uplink MIMO transmission capability supported by the terminal.

A first point that needs to be explained is that the first signaling and the second signaling described in the embodiments of the present invention are only examples. In another example, the first signaling and the second signaling are a radio resource control (RRC) signaling.

A second point that needs to be explained is that a number of uplink MIMO layers described in the embodiments of the present invention are only examples. In another example, the number of uplink MIMO layers of the present invention may be a number of uplink ranks.

With the method according to embodiments of the present invention, when the terminal supports the uplink MIMO transmission capability of 6 layers or 8 layers, the terminal reports the uplink MIMO transmission capability supported by itself via the first signaling and the second signaling. In this way, it supports the terminal to report the greater uplink MIMO transmission capability for matching with the actual system uplink transmission capability, the network is supported to schedule the higher number of data layers, and the higher uplink transmission rate is achieved.

It should be noted that the above embodiments may be split into new embodiments, or the above embodiments may be combined into new embodiments, and the present invention does not limit a splitting manner and a combination manner.

Based on the embodiments shown in FIG. 2, the first uplink MIMO transmission capability does not include the second uplink MIMO transmission capability.

In embodiments of the present invention, the first signaling and the second signaling indicate two different uplink MIMO transmission capabilities, that is, the first uplink MIMO transmission capability is higher than the second uplink MIMO transmission capability.

In some embodiments, a number of layers corresponding to the first uplink MIMO transmission capability is 6 layers or 8 layers, and a number of layers corresponding to the second uplink MIMO transmission capability is at most 4 layers.

For example, the number of layers corresponding to the first uplink MIMO transmission capability is 6 layers, and the number of layers corresponding to the second uplink MIMO transmission capability is 4 layers. Alternatively, the number of layers corresponding to the first uplink MIMO transmission capability is 8 layers, and the number of layers corresponding to the second uplink MIMO transmission capability is 2 layers. Alternatively, the number of layers corresponding to the first uplink MIMO transmission capability and the number of layers corresponding to the second uplink MIMO transmission capability may be other numbers of layers, which are not limited in embodiments of the present invention.

In some embodiments, the first signaling is FeatureSetUplinkPerCC-vl8xy.

Optionally, the first signaling may be referred to as a feature set of an uplink of per component carrier (CC) with a version number of v18xy.

In some embodiments, the second signaling is FeatureSetUplinkPerCC.

Optionally, the second signaling may be referred to as a feature set of an uplink of per CC.

A format and parameter code of the first signaling is as follows:

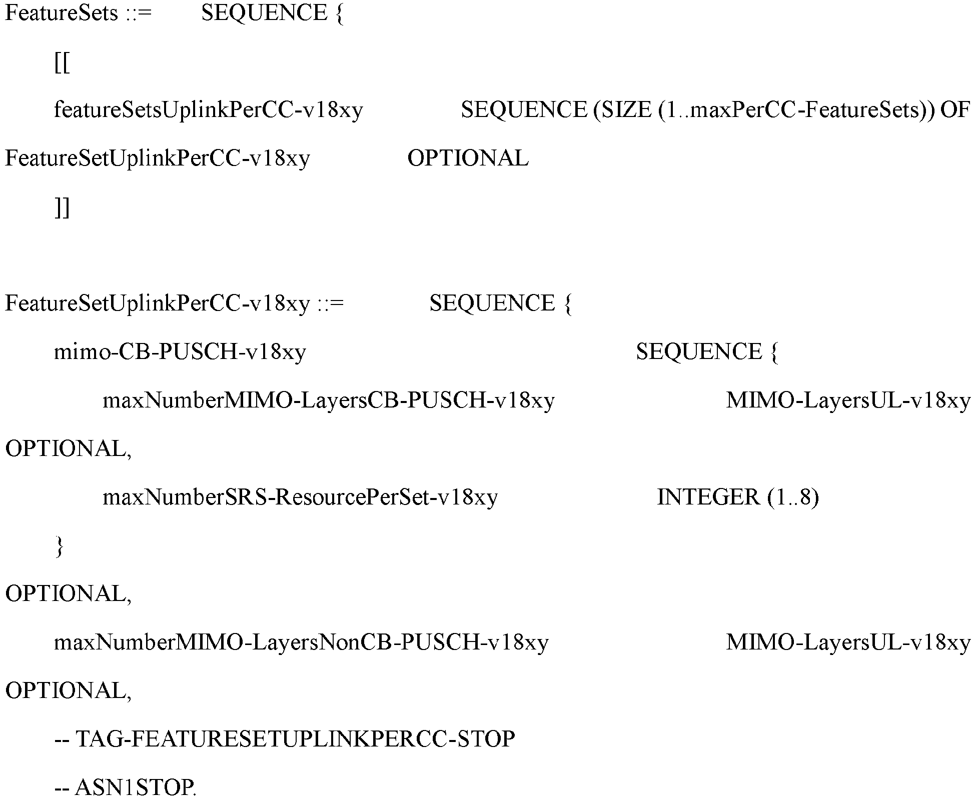

The following is a brief description for the format and parameter code of the first signaling.

The first signaling is a feature set for every uplink carrier sequence, and a size of the first signaling is from 1 to a maximum value of every feature.

For the first signaling, the first signaling is a signaling with the version number of v18xy, and the first signaling indicates that a maximum number of MIMO layers supported by a physical uplink shared channel (PUSCH) is a number of uplink MIMO layers.

A maximum number of a sounding reference signal resource per set is an integer from 1 to 8.

For a non-codebook precoding, the maximum number of MIMO layers supported by the PUSCH is the number of uplink MIMO layers.

The number of MIMO layers indicated by the first signaling may be 6 layers or 8 layers.

It should be noted that the above embodiments may be split into new embodiments, or the above embodiments may be combined into new embodiments, and the present invention does not limit a splitting manner and a combination manner.

Based on embodiments shown in FIG. 2, the first uplink MIMO transmission capability includes the second uplink MIMO transmission capability.

In embodiments of the present invention, the first signaling and the second signaling may indicate two different uplink MIMO transmission capabilities, or the first signaling and the second signaling may indicate two identical uplink MIMO transmission capabilities. That is, the first uplink MIMO transmission capability may be higher than the second uplink MIMO transmission capability. Alternatively, the first uplink MIMO transmission capability may be equal to the second uplink MIMO transmission capability.

In some embodiments, the first uplink MIMO transmission capability is at most 8 layers, and the second uplink MIMO transmission capability is at most 4 layers.

For example, the number of layers corresponding to the first uplink MIMO transmission capability is 6 layers, and the number of layers corresponding to the second uplink MIMO transmission capability is 4 layers. Alternatively, the number of layers corresponding to the first uplink MIMO transmission capability is 8 layers, and the number of layers corresponding to the second uplink MIMO transmission capability is 2 layers. Alternatively, the number of layers corresponding to the first uplink MIMO transmission capability is 4 layers, and the number of layers corresponding to the second uplink MIMO transmission capability is 4 layers. The number of layers corresponding to the first uplink MIMO transmission capability and the number of layers corresponding to the second uplink MIMO transmission capability may be other numbers of layers, which are not limited in embodiments of the present invention.

It should be noted that the first uplink MIMO transmission capability is the same as the second uplink MIMO transmission capability, and a content included in the first signaling is the same as a content included in the second signaling.

In an embodiment of the present invention, if the first uplink MIMO transmission capability indicated by the first signaling is the same as the second uplink MIMO transmission capability indicated by the second signaling, the first signaling and the second signaling indicate the same transmission capability. That is, the content included in the first signaling and the content included in the second signaling are the same.

A format and parameter code of the first signaling is as follows:

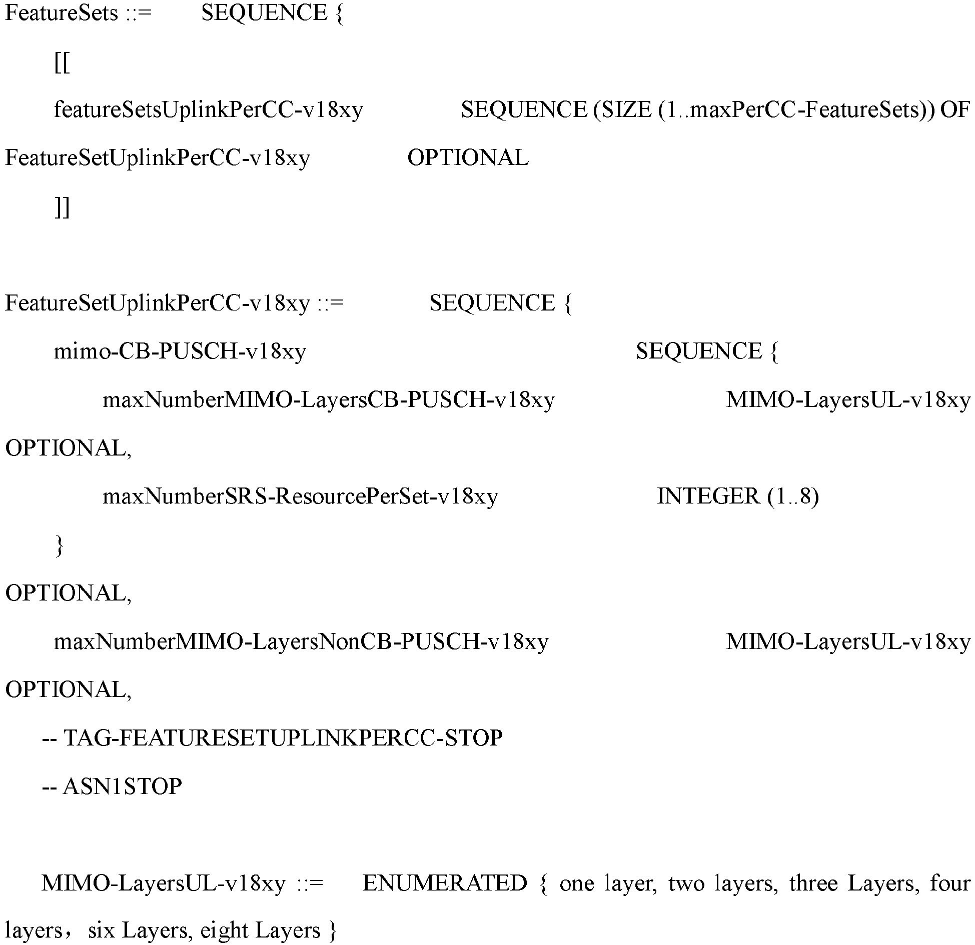

The following is a brief description for the format and parameter code of the first signaling.

The first signaling is a feature set for every uplink carrier sequence, and a size of the first signaling is from 1 to a maximum value of every feature.

For the first signaling, the first signaling is a signaling with the version number of v18xy, and the first signaling indicates that a maximum number of MIMO layers supported by a physical uplink shared channel is a number of uplink MIMO layers.

A maximum number of sounding reference signal resource per set is an integer from 1 to 8.

For a non-codebook precoding, the maximum number of MIMO layers supported by the physical uplink shared channel (PUSCH) is the number of uplink MIMO layers.

The number of MIMO layers indicated by the first signaling may be 1 layer, 2 layers, 3 layers, 4 layers, 6 layers or 8 layers.

It should be noted that the above embodiments may be split into new embodiments, or the above embodiments may be combined into new embodiments, and the present invention does not limit a splitting manner and a combination manner.

Embodiments shown in FIG. 2 illustrate that the network device determines the maximum uplink MIMO transmission capability supported by the terminal based on the first signaling and the second signaling. Based on the embodiments shown in FIG. 2, the network device determines the maximum uplink MIMO transmission capability supported by the terminal based on whether the first signaling is identified. The following is classified into two situations for description.

In a first situation, the network device determines a number of layers corresponding to the first uplink MIMO transmission capability indicated by the first signaling to be the limit on the number of layers for the actual uplink MIMO transmission in a case where the network device identifies the first signaling.

In an embodiment of the present invention, for network devices with different configurations, some network devices may be able to identify the first signaling and the second signaling, and some network devices may only identify the second signaling and does not identify the first signaling. Therefore, the network device determines the limit on the number of layers for the actual uplink MIMO transmission based on whether the first signaling can be identified.

After the network device receives the first signaling and the second signaling, if the network device can identify the first signaling, and the first uplink MIMO transmission capability indicated by the first signaling is not lower than the second uplink MIMO transmission capability indicated by the second signaling, then the network device may ignore the second signaling and determine the number of layers corresponding to the first uplink MIMO transmission capability indicated by the first signaling to be the limit on the number of layers for the actual uplink MIMO transmission.

For example, the number of layers corresponding to the first uplink MIMO transmission capability indicated by the first signaling is 6 layers, the number of layers corresponding to the second uplink MIMO transmission capability indicated by the second signaling is 4 layers, and if the network device is able to identify the first signaling, then it ignores the second signaling. The network device determines that the limit on the number of layers for the actual uplink MIMO transmission is 6 layers. Alternatively, the number of layers corresponding to the first uplink MIMO transmission capability indicated by the first signaling is 8 layers, the number of layers corresponding to the second uplink MIMO transmission capability indicated by the second signaling is 4 layers, and if the network device is able to identify the first signaling, then it ignores the second signaling. The network device determines that the limit on the number of layers for the actual uplink MIMO transmission is 8 layers.

In some embodiments, after receiving the first signaling and the second signaling, the network device may obtain version numbers of the first signaling and the second signaling, and determine whether the network device may identify the first signaling and the second signaling based on the obtained version numbers of the first signaling and the second signaling.

With the method according to the embodiments of the present invention, when the network device determines that the first signaling can be identified, since the uplink MIMO transmission capability indicated by the first signaling is not lower than the uplink MIMO transmission capability indicated by the second signaling, the uplink MIMO transmission capability indicated by the first signaling is determined to be the limit on the number of layers for the actual uplink MIMO transmission, thereby increasing the maximum uplink MIMO transmission capability supported by the terminal and improving the service transmission rate.

In a second situation, the network device determines a number of layers corresponding to the second uplink MIMO transmission capability indicated by the second signaling to be the limit on the number of layers for the actual uplink MIMO transmission in a case where the network device does not identify the first signaling.

In an embodiment of the present invention, after the network device receives the first signaling and the second signaling, if the network device is not able to identify the first signaling but is able to identify the second signaling, the network device ignores the first signaling and determines the number of layers corresponding to the second uplink MIMO transmission capability indicated by the second signaling to be the limit on the number of layers for the actual uplink MIMO transmission.

For example, the number of layers corresponding to the first uplink MIMO transmission capability indicated by the first signaling is 6 layers, the number of layers corresponding to the second uplink MIMO transmission capability indicated by the second signaling is 4 layers, and if the network device does not identify the first signaling but identifies the second signaling, then the network device ignores the first signaling and determines that the limit on the number of layers for the actual uplink MIMO transmission is 4 layers. Alternatively, the number of layers corresponding to the first uplink MIMO transmission capability indicated by the first signaling is 8 layers, the number of layers corresponding to the second uplink MIMO transmission capability indicated by the second signaling is 4 layers, and if the network device does not identify the first signaling but identifies the second signaling, then the network device ignores the first signaling and determines that the limit on the number of layers for the actual uplink MIMO transmission is 4 layers.

In some embodiments, after receiving the first signaling and the second signaling, the network device may obtain version numbers of the first signaling and the second signaling, and determine whether the network device may identify the first signaling and the second signaling based on the obtained version numbers of the first signaling and the second signaling.

With the method according to embodiments of the present invention, when the network device does not identify the first signaling, the network device determines the second uplink MIMO transmission capability indicated by the second signaling to be the limit on the number of layers for the actual uplink MIMO transmission, thereby avoiding a situation where the terminal cannot report its own uplink MIMO transmission capability, ensuring that the network device is aware of the uplink MIMO transmission capability supported by the terminal, and thus ensuring transmission for a service.

It should be noted that the above embodiments may be split into new embodiments, or the above embodiments may be combined into new embodiments, and the present invention does not limit a splitting manner and a combination manner.

Embodiments shown in FIG. 2 illustrate that the network device determines the maximum uplink MIMO transmission capability supported by the terminal based on the first signaling and the second signaling. Based on embodiments shown in FIG. 2, the network device may further configure a number of layers for an uplink MIMO transmission according to the maximum uplink MIMO transmission capability supported by the terminal. Referring to FIG. 4, the method further includes the following step.

In step 204, the network device configures the number of layers for the actual uplink MIMO transmission, and the number of layers for the actual uplink MIMO transmission is not greater than a number of layers corresponding to the maximum uplink MIMO transmission capability supported by the terminal.

In an embodiment of the present invention, the network device may determine the maximum uplink MIMO transmission capability supported by the terminal. When the network device configures the number of layers for the actual uplink MIMO transmission for the terminal, it may refer to the determined maximum uplink MIMO transmission capability supported by the terminal, and the number of layers for the actual uplink MIMO transmission configured by the network device is not greater than the number of layers corresponding to the maximum uplink MIMO transmission capability supported by the terminal.

For example, if the number of layers corresponding to the maximum uplink MIMO transmission capacity determined by the network device is 6 layers, the number of layers for the actual uplink MIMO transmission configured by the network device is 4 layers, or the number of layers for the actual uplink MIMO transmission configured by the network device is 6 layers, or the number of layers for the actual uplink MIMO transmission configured by the network device is other values, which is not limited in embodiments of the present invention.

With the method according to embodiments of the present invention, the network device configures the number of layers for the uplink MIMO transmission for the terminal based on the maximum uplink MIMO transmission capability supported by the terminal, thereby preventing the number of layers for the uplink MIMO transmission configured by the network device from exceeding the maximum number of layers for the uplink MIMO transmission supported by the terminal, ensuring the uplink MIMO transmission of the terminal and improving the transmission rate for the terminal.

It should be noted that the above embodiments may be split into new embodiments, or the above embodiments may be combined into new embodiments, and the present invention does not limit a splitting manner and a combination manner.

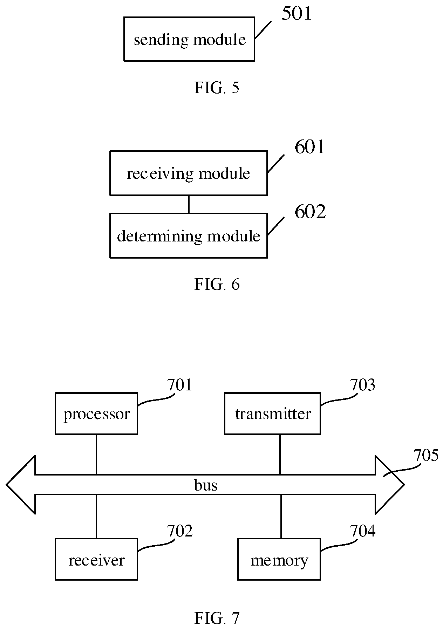

FIG. 5 shows a block diagram of an apparatus for reporting an uplink MIMO transmission capability according to an illustrative embodiment of the present invention. Referring to FIG. 5, the apparatus includes: a sending module 501 configured to send a first signaling and a second signaling to a network device, in which the first signaling is configured to indicate a first uplink MIMO transmission capability supported by the terminal, and the second signaling is configured to indicate a second uplink MIMO transmission capability supported by the terminal.

The first uplink MIMO transmission capability is not lower than the second uplink MIMO transmission capability.

With the apparatus according to embodiments of the present invention, the terminal reports its own uplink MIMO transmission capability via the first signaling and the second signaling. Since the uplink MIMO transmission capability indicated by the first signaling is not less than the uplink MIMO transmission capability indicated by the second signaling, the terminal may support the greater uplink MIMO transmission capability and may report the greater MIMO transmission capability via the first signaling. In this way, it supports the terminal to report the greater uplink MIMO transmission capability for matching with the actual system uplink transmission capability, the network is supported to schedule a higher number of data layers, and the higher uplink transmission rate is achieved.

In some embodiments, a maximum uplink MIMO transmission capability supported by the terminal is 6 layers or 8 layers.

In some embodiments, the first uplink MIMO transmission capability includes the second uplink MIMO transmission capability.

In some embodiments, the first uplink MIMO transmission capability is the same as the second uplink MIMO transmission capability, and a content included in the first signaling is the same as a content included in the second signaling.

In some embodiments, a maximum number of layers indicated by the first signaling is 6 layers, or a maximum number of layers indicated by the first signaling is 8 layers.

In some embodiments, a maximum number of layers indicated by the second signaling is 4 layers.

In some embodiments, the first signaling and the second signaling are an RRC signaling.

It should be noted that when realizing functions of the apparatus according to the above embodiments, an example for describing the individual modules classified by function is given. In actual applications, the above functions may be assigned to different functional modules as needed, that is, an internal structure of the apparatus may be divided into different functional modules to complete all or some of the functions described above. In addition, the apparatus and method embodiments provided by the above embodiments belong to a same concept, specific implementations for the apparatus embodiments may be referred to details in the method embodiments, which will not be repeated here.

FIG. 6 shows a block diagram of an apparatus for receiving an uplink MIMO transmission capability according to an illustrative embodiment of the present invention. Referring to FIG. 6, the apparatus includes: a receiving module 601 configured to receive a first signaling and a second signaling sent by a terminal, in which the first signaling is configured to indicate a first uplink MIMO transmission capability supported by the terminal, and the second signaling is configured to indicate a second uplink MIMO transmission capability supported by the terminal, and the first uplink MIMO transmission capability is not lower than the second uplink MIMO transmission capability; a processing module 602 configured to determine a limit on a number of layers for an actual uplink MIMO transmission according to a maximum uplink MIMO transmission capability supported by the terminal.

With the apparatus according to embodiments of the present invention, the terminal reports its own uplink MIMO transmission capability via the first signaling and the second signaling. Since an uplink MIMO transmission capability indicated by the first signaling is not less than an uplink MIMO transmission capability indicated by the second signaling, the terminal may support the greater uplink MIMO transmission capability and may report the greater MIMO transmission capability via the first signaling. In this way, it supports the terminal to report the greater uplink MIMO transmission capability for matching with the actual system uplink transmission capability, the network is supported to schedule a higher number of data layers, and the higher uplink transmission rate is achieved.

In some embodiments, the processing module 602 is further configured to determine a number of layers corresponding to the first uplink MIMO transmission capability indicated by the first signaling to be the limit on the number of layers for the actual uplink MIMO transmission in a case where the first signaling is identified.

In some embodiments, the processing module 602 is further configured to determine a number of layers corresponding to the second uplink MIMO transmission capability indicated by the second signaling to be the limit on the number of layers for the actual uplink MIMO transmission in a case where the first signaling is not identified.

In some embodiments, the apparatus further includes: the processing module 602 configured to configure the number of layers for the actual uplink MIMO transmission, in which the number of layers for the actual uplink MIMO transmission is not greater than a number of layers corresponding to the maximum uplink MIMO transmission capability supported by the terminal.

In some embodiments, the first uplink MIMO transmission capability includes the second uplink MIMO transmission capability.

In some embodiments, the first uplink MIMO transmission capability is the same as the second uplink MIMO transmission capability, and a content included in the first signaling is the same as a content included in the second signaling.

In some embodiments, a maximum number of layers indicated by the first signaling is 6 layers, or a maximum number of layers indicated by the first signaling is 8 layers.

In some embodiments, a maximum number of layers indicated by the second signaling is 4 layers.

In some embodiments, the first signaling and the second signaling are an RRC signaling.

It should be noted that when realizing functions of the apparatus according to the above embodiments, an example for describing the individual modules classified by function is given. In actual applications, the above functions may be assigned to different functional modules as needed, that is, an internal structure of the apparatus may be divided into different functional modules to complete all or some of the functions described above. In addition, the apparatus and method embodiments provided by the above embodiments belong to a same concept, specific implementations for the apparatus embodiments may be referred to details in the method embodiments, which will not be repeated here.

FIG. 7 shows a schematic diagram of a communication device according to an illustrative embodiment of the present invention. The communication device includes: a processor 701, a receiver 702, a transmitter 703, a memory 704 and a bus 705.

The processor 701 includes one or more processing cores. The processor 701 executes various functional applications and information processing by running software programs and modules.

The receiver 702 and the transmitter 703 may be implemented as a communication component, and the communication component may be a communication chip.

The memory 704 is connected to the processor 701 via the bus 705.

The memory 704 may be used to store at least one program code, and the processor 701 is used to execute the at least one program code to implement individual steps in the above method embodiments.

Moreover, the communication device may be a terminal or a network device. The memory 704 may be implemented using any type of volatile or non-volatile storage devices, or a combination thereof, including, but not limited to, a magnetic or optical disk, an electrically erasable programmable read-only memory (EEPROM), an erasable programmable read-only memory (EPROM), a static random access memory (SRAM), a read-only memory (ROM), a magnetic memory, a flash memory, a programmable read-only memory (PROM).

In an embodiment, a computer-readable storage medium is further provided. The computer-readable storage medium has stored therein an executable program code, and the executable program code is loaded and executed by the processor to implement the method performed by the communication device according to the above various method embodiments.

In an embodiment, a chip is provided, which includes a programmable logic circuit and/or program instructions for implementing the method according to various method embodiments when the chip is run on a terminal or a network device.

In an embodiment, a computer program product is provided. When the computer program product is executed by a processor of a terminal or a network device, it is configured to implement the method according to the above various method embodiments.

Those ordinarily skilled in the art shall understand that all or some of the steps to implement the above embodiments may be completed by hardware, or may be completed by programs commanding the related hardware. The program may be stored in a computer-readable storage medium. The storage medium mentioned above may be a read-only memory, a magnetic disk, or an optical disk, etc.

The above descriptions only involve optional embodiments of the present invention and are not intended to limit the present invention. Any modifications, equivalent substitutions, and improvements made within the spirit and principle of the present invention shall be included in the protection scope of the present invention.

## Claims

1. A method for reporting an uplink multiple input multiple output, MIMO, transmission capability, performed by a terminal, comprising:
sending a first signaling and a second signaling to a network device, wherein the first signaling is configured to indicate a first uplink MIMO transmission capability supported by the terminal, and the second signaling is configured to indicate a second uplink MIMO transmission capability supported by the terminal;
wherein the first uplink MIMO transmission capability is not lower than the second uplink MIMO transmission capability.

2. The method according to claim 1, wherein a maximum uplink MIMO transmission capability supported by the terminal is 6 layers or 8 layers.

3. The method according to claim 1, wherein the first uplink MIMO transmission capability comprises the second uplink MIMO transmission capability.

4. The method according to claim 3, wherein the first uplink MIMO transmission capability is the same as the second uplink MIMO transmission capability, and a content comprised in the first signaling is the same as a content comprised in the second signaling.

5. The method according to any one of claims 1 to 4, wherein a maximum number of layers indicated by the first signaling is 6 layers, or a maximum number of layers indicated by the first signaling is 8 layers.

6. The method according to any one of claims 1 to 4, wherein a maximum number of layers indicated by the second signaling is 4 layers.

7. The method according to any one of claims 1 to 6, wherein the first signaling and the second signaling are a radio resource control, RRC, signaling.

8. A method for receiving an uplink MIMO transmission capability, performed by a network device, comprising:
receiving a first signaling and a second signaling sent by a terminal, wherein the first signaling is configured to indicate a first uplink MIMO transmission capability supported by the terminal, and the second signaling is configured to indicate a second uplink MIMO transmission capability supported by the terminal, and the first uplink MIMO transmission capability is not lower than the second uplink MIMO transmission capability; and
determining a limit on a number of layers for an actual uplink MIMO transmission according to a maximum uplink MIMO transmission capability supported by the terminal.

9. The method according to claim 8, wherein determining the limit on the number of layers for the actual uplink MIMO transmission according to the maximum uplink MIMO transmission capability supported by the terminal comprises:
determining a number of layers corresponding to the first uplink MIMO transmission capability indicated by the first signaling to be the limit on the number of layers for the actual uplink MIMO transmission in a case where the first signaling is identified.

10. The method according to claim 8, wherein determining the limit on the number of layers for the actual uplink MIMO transmission according to the maximum uplink MIMO transmission capability supported by the terminal comprises:
determining a number of layers corresponding to the second uplink MIMO transmission capability indicated by the second signaling to be the limit on the number of layers for the actual uplink MIMO transmission in a case where the first signaling is not identified.

11. The method according to any one of claims 8 to 10, further comprising:
configuring the number of layers for the actual uplink MIMO transmission, wherein the number of layers for the actual uplink MIMO transmission is not greater than a number of layers corresponding to the maximum uplink MIMO transmission capability supported by the terminal.

12. The method according to claim 8, wherein the first uplink MIMO transmission capability comprises the second uplink MIMO transmission capability.

13. The method according to claim 12, wherein the first uplink MIMO transmission capability is the same as the second uplink MIMO transmission capability, and a content comprised in the first signaling is the same as a content comprised in the second signaling.

14. The method according to any one of claims 8 to 13, wherein a maximum number of layers indicated by the first signaling is 6 layers, or a maximum number of layers indicated by the first signaling is 8 layers.

15. The method according to any one of claims 8 to 14, wherein a maximum number of layers indicated by the second signaling is 4 layers.

16. The method according to any one of claims 8 to 15, wherein the first signaling and the second signaling are an RRC signaling.

17. An apparatus for reporting an uplink MIMO transmission capability, comprising:
a sending module configured to send a first signaling and a second signaling to a network device, wherein the first signaling is configured to indicate a first uplink MIMO transmission capability supported by the terminal, and the second signaling is configured to indicate a second uplink MIMO transmission capability supported by the terminal;
wherein the first uplink MIMO transmission capability is not lower than the second uplink MIMO transmission capability.

18. The apparatus according to claim 17, wherein a maximum uplink MIMO transmission capability supported by the terminal is 6 layers or 8 layers.

19. The apparatus according to claim 17, wherein the first uplink MIMO transmission capability comprises the second uplink MIMO transmission capability.

20. The apparatus according to claim 19, wherein the first uplink MIMO transmission capability is the same as the second uplink MIMO transmission capability, and a content comprised in the first signaling is the same as a content comprised in the second signaling.

21. The apparatus according to any one of claims 17 to 20, wherein a maximum number of layers indicated by the first signaling is 6 layers, or a maximum number of layers indicated by the first signaling is 8 layers.

22. The apparatus according to any one of claims 17 to 20, wherein a maximum number of layers indicated by the second signaling is 4 layers.

23. The apparatus according to any one of claims 17 to 22, wherein the first signaling and the second signaling are an RRC signaling.

24. An apparatus for receiving an uplink MIMO transmission capability, comprising:
a receiving module configured to receive a first signaling and a second signaling sent by a terminal, wherein the first signaling is configured to indicate a first uplink MIMO transmission capability supported by the terminal, and the second signaling is configured to indicate a second uplink MIMO transmission capability supported by the terminal, and the first uplink MIMO transmission capability is not lower than the second uplink MIMO transmission capability;
a processing module configured to determine a limit on a number of layers for an actual uplink MIMO transmission according to a maximum uplink MIMO transmission capability supported by the terminal.

25. The apparatus according to claim 24, wherein the processing module is further configured to determine a number of layers corresponding to the first uplink MIMO transmission capability indicated by the first signaling to be the limit on the number of layers for the actual uplink MIMO transmission in a case where the first signaling is identified.

26. The apparatus according to claim 24, wherein the processing module is further configured to determine a number of layers corresponding to the second uplink MIMO transmission capability indicated by the second signaling to be the limit on the number of layers for the actual uplink MIMO transmission in a case where the first signaling is not identified.

27. The apparatus according to any one of claims 24 to 26, further comprising:
the processing module configured to configure the number of layers for the actual uplink MIMO transmission, wherein the number of layers for the actual uplink MIMO transmission is not greater than a number of layers corresponding to the maximum uplink MIMO transmission capability supported by the terminal.

28. The apparatus according to claim 24, wherein the first uplink MIMO transmission capability comprises the second uplink MIMO transmission capability.

29. The apparatus according to claim 28, wherein the first uplink MIMO transmission capability is the same as the second uplink MIMO transmission capability, and a content comprised in the first signaling is the same as a content comprised in the second signaling.

30. The apparatus according to any one of claims 24 to 29, wherein a maximum number of layers indicated by the first signaling is 6 layers, or a maximum number of layers indicated by the first signaling is 8 layers.

31. The apparatus according to any one of claims 24 to 29, wherein a maximum number of layers indicated by the second signaling is 4 layers.

32. The apparatus according to any one of claims 24 to 31, wherein the first signaling and the second signaling are an RRC signaling.

33. A terminal, comprising:
a processor; and
a transceiver connected to the processor;
wherein the processor is configured to load and execute executable instructions to implement the method according to any one of claims 1 to 7.

34. A network device, comprising:
a processor; and
a transceiver connected to the processor;
wherein the processor is configured to load and execute executable instructions to implement the method according to any one of claims 8 to 16.

35. A computer-readable storage medium, having stored therein executable program codes that, when loaded and executed by a processor, cause the method according to any one of claims 1 to 16 to be implemented.

36. A computer program product, when executed by a processor of a terminal or network device, configured to implement the method according to any one of claims 1 to 16.
